# FASCICULE DE BREVET EUROPEEN

(11) **EP 1 726 677 B1**
(45) Date de publication et mention de la délivrance du brevet: **13.07.2011**
(21) Numéro de dépôt: 06114592.6
(22) Date de dépôt: 26.05.2006
(51) Int. Cl.: C22C 47/00, C22C 49/00

(54) **Procédé de fabrication d'une pièce avec un insert en matériau composite à matrice métallique et fibres céramiques**
Verfahren zur Herstellung eines Bauteils mit einem aus Keramikfaser- und Metallmatrix-Verbundmaterial bestehendem Einbaustück
Process of manufacturing an article comprising a metal matrix and ceramic fibre composite insert

(30) Priorité: 27.05.2005 FR 0551408
(43) Date de publication de la demande: 29.11.2006
(73) Titulaire: SNECMA, 75015 Paris (FR)
(72) Inventeur: Franchet, Jean-Michel, 75018, Paris (FR); Fromentin Jean-François, 77240, Cesson la Foret (FR); Grosbois, Christophe, 77380 COMBS LA VILLE (FR); Klein, Gilles, 95540, Mery sur Oise (FR)
(74) Mandataire: David, Daniel

(56) Documents cités:
- EP-A- 0 931 846
- WO-A-98/11265
- FR-A- 2 684 578
- US-A- 3 763 001
- US-A- 5 897 922

## Description

L'invention concerne la fabrication de pièces comportant un insert en matériau composite du type constitué de fibres céramiques dans une matrice métallique.

Dans le domaine de l'aéronautique, notamment, un objectif constant est l'optimisation de la résistance des pièces pour une masse et un encombrement minimaux. Certaines pièces peuvent désormais comporter un insert en matériau composite à matrice métallique, la pièce pouvant être par ailleurs monolithique. Un tel matériau composite comporte une matrice d'alliage métallique, par exemple d'alliage de titane Ti, au sein de laquelle s'étendent des fibres, par exemple des fibres céramiques de carbure de silicium SiC. De telles fibres présentent une résistance en traction bien supérieure à celle du titane (typiquement, 4000 MPa contre 1000 MPa). Ce sont donc les fibres qui reprennent les efforts, la matrice d'alliage métallique assurant une fonction de liant avec le reste de la pièce, ainsi que de protection et d'isolation des fibres, qui ne doivent pas entrer en contact les unes avec les autres. En outre, les fibres céramiques sont résistantes à l'érosion, mais doivent nécessairement être renforcées par du métal.

Ces matériaux composites peuvent être utilisés dans la fabrication de disques, d'arbres, de corps de vérins, de carters, d'entretoises, comme renforts de pièces monolithiques telles des aubes, etc.

Afin d'obtenir un tel insert de matériau composite, on forme préalablement des fils dits "fils enduits", comprenant une fibre de céramique enduite de métal. Le métal donne au fil l'élasticité et la souplesse nécessaires à sa manipulation. De préférence, un fil très fin de carbone ou de tungstène s'étend au centre de la fibre, le long de son axe, ce fil de carbone est enrobé de carbure de silicium tandis qu'une fine couche de carbone est prévue à l'interface entre la fibre et le métal, pour assurer une fonction de barrière de diffusion et de tampon lors de la relaxation thermique différentielle qui intervient au moment du refroidissement du métal liquide déposé sur la fibre.

La fabrication des fils de matériau composite, ou fils enduits, peut être effectuée de diverses manières, par exemple par dépôt de métal en phase vapeur sous un champ électrique, par électrophorèse à partir de poudre métallique ou encore par enduction de fibres céramiques au trempé dans un bain de métal liquide. Un tel procédé d'enduction de fibres céramiques, au trempé, dans un métal liquide, est présenté dans le brevet EP 0 931 846, au nom de la Demanderesse. Ce procédé est beaucoup plus rapide que les autres procédés cités. On obtient ainsi des fils de matériau composite, ou fils enduits, qui servent de base à la fabrication de l'insert de matériau composite qui sera inclus dans la pièce.

Dans les procédés connus d'obtention d'une pièce avec un insert en matériau composite à matrice d'alliage métallique, le fil enduit est mis en forme en une pièce que l'on nomme préforme. Une telle préforme est obtenue par bobinage du fil enduit entre deux flasques métalliques de maintien s'étendant autour d'un mandrin central. Le bobinage se fait en spirale, la préforme obtenue se présentant sous la forme d'un disque, dont l'épaisseur est celle du fil enduit la constituant. Afin d'assurer la cohésion de la préforme, les flasques de maintien comportent des ajours au travers desquels est pulvérisé un matériau remplissant une fonction de collage, par exemple une résine d'acrylique.

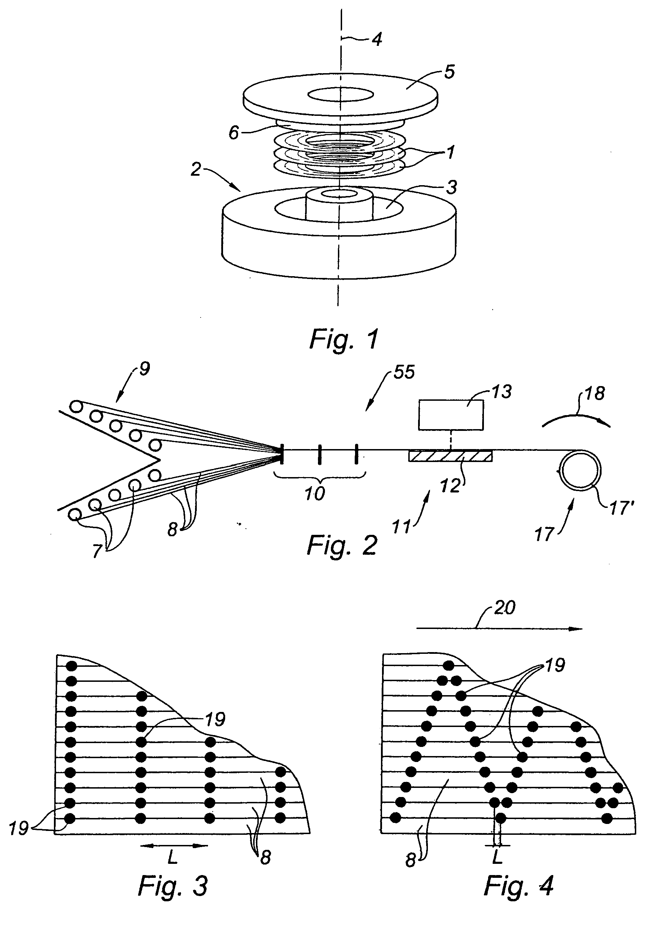

La figure 1 représente de manière schématique un mode de réalisation d'une pièce avec un insert en matériau composite. Une pluralité de préformes 1, chacune en forme de disque, sont empilées dans un conteneur 2, de forme globalement cylindrique. Le conteneur comporte une cavité annulaire 3, dont la forme en coupe transversale à l'axe 4 du conteneur est celle des préformes 1. Des préformes 1 sont empilées jusqu'à remplir toute la hauteur de la cavité 3. Typiquement, 80 préformes sont ainsi empilées. Cette opération est manuelle.

Il est alors nécessaire d'effectuer une opération de déliantage, suivie d'un dégazage, afin d'ôter le liant, par exemple une résine d'acrylique, des préformes 1. En effet, il ne doit rester aucun élément contaminant, à froid et à chaud, avec le titane, au stade de la compaction.

Un couvercle annulaire 5, comportant une saillie 6 de forme complémentaire à celle de la cavité annulaire, mais de dimension axiale plus faible, est rapporté sur le dessus du conteneur 2, la saillie 6 étant mise en contact avec la préforme 1 supérieure. Le couvercle 5 est soudé au conteneur 2, par exemple par soudage par faisceau d'électrons, l'ensemble étant de préférence mis sous vide. Il s'ensuit une étape de compaction isostatique à chaud de ensemble. Lors de cette dernière l'insert composé de fil enduits juxtaposés est compacté et les gaines métalliques des fils enduits se soudent entre elles et avec les parois de la cavité 3 du conteneur 2, par diffusion, pour former un ensemble dense composé d'alliage métallique (par exemple un alliage de Titane), au sein de laquelle s'étendent annulairement les fibres de céramique (ici SiC).

On obtient une pièce cylindrique, comportant un insert d'un matériau composite, résultat de la compaction des préformes 1 empilées. Cette pièce peut éventuellement subir un traitement de relaxation des contraintes permettant de compenser la dilatation différentielle entre les fibres céramiques et le métal, dans lequel elles sont noyées, lors du refroidissement de l'ensemble.

La pièce est alors généralement usinée, de façon à obtenir la pièce finale. Par exemple, si l'objectif est la fabrication d'un disque de compresseur monobloc - par monobloc, on entend que les aubes sont formées d'une seule pièce avec le disque - le conteneur, comportant son insert de matériau composite, est usiné, de façon à former un disque aubagé monobloc, une partie de la jante supportant les aubes comportant l'insert de matériau composite. La jante est de dimensions très inférieures aux jantes de disques monolithiques classiques d'alliage de métal, grâce aux grandes raideur et résistance conférées à l'ensemble par les fibres céramiques de l'insert en matériau composite, contenu dans la masse de la jante. Notamment, une telle jante peut se présenter sous la forme d'un simple anneau, et non d'un flasque ou disque en l'absence d'insert.

Ce procédé de fabrication d'une pièce avec un insert en matériau composite présente de nombreux inconvénients, et n'est pas industriellement exploitable du fait de la longueur, de la complexité et de la précision requise de ses étapes.

Tout d'abord, les fibres de céramique étant fragiles, les opérations sur les fils enduits doivent avant tout empêcher tout contact entre elles, et le soudage de fils enduits n'a pas été envisagé jusqu'à présent.

En outre, les opérations de déliantage et de dégazage sont non seulement longues, mais on n'est jamais certain que la totalité du liant ait été enlevée. Afin de s'assurer de la complète disparition du liant, nécessaire notamment au bon comportement subséquent de l'alliage de Titane, plusieurs étapes de déliantage et dégazage sont nécessaires, ce qui augmente la durée et le coût globaux du procédé.

De surcroît, en cas de rupture du fil lors de son bobinage entre les deux flasques, il est nécessaire de former une nouvelle préforme, dans la mesure où il n'existe pas actuellement de moyens permettant de résoudre le problème et de reprendre le bobinage.

Par ailleurs, l'étape de positionnement des préformes de fils enduits dans le conteneur est actuellement manuelle. Le coût de l'opération et surtout sa précision s'en trouvent affectés. Or, le positionnement du fil enduit dans le conteneur est un facteur critique de la gamme de fabrication, dans la mesure où il conditionne les performances du matériau, avec une influence très importante de l'orientation de la fibre céramique en fonction des sollicitations principales de la pièce. Il conditionne également la qualité du matériau composite, par la conservation de l'intégrité de la fibre céramique, lors des différentes étapes de fabrication de la pièce. Il conditionne enfin le coût final de la pièce, de nouveau, du fait que les opérations de positionnement des fils enduits sont relativement longues et effectuées de manière manuelle. Le positionnement des fils dans le conteneur gagnerait donc à être amélioré.

Le document WO 98/11265 concerne un procédé conforme au préambule de la revendication 1.

L'invention a pour objet un procédé qui permet d'industrialiser la fabrication de pièces, à symétrie axiale notamment, comportant un insert en matériau composite.

L'invention concerne un procédé conforme à l'objet de la revendication 1.

L'invention sera mieux comprise et d'autres caractéristiques ressortiront de la lecture qui suit d'une mise en oeuvre pratique du procédé en référence aux dessins annexés sur lesquels :
- la figure 1 représente une vue en perspective schématique d'une opération d'obtention d'une pièce avec un insert en matériau composite de l'art antérieur ;
- la figure 2 représente une vue schématique d'un dispositif de fabrication d'une nappe liée de fils enduits;
- la figure 3 représente une vue schématique de dessus d'une nappe formée selon un premier mode opératoire du dispositif de la figure 2 ;
- la figure 4 représente une vue schématique de dessus d'une nappe formée selon un deuxième mode opératoire du dispositif de la figure 2 ;
- la figure 5 représente une vue schématique en coupe, dans un plan transversal à la direction de déroulement des fils enduits, au niveau du module de soudage par laser du dispositif de la figure 2, du soudage de deux fils entre eux ;
- la figure 6 représente une vue en coupe schématique partielle d'une pièce formant la partie interne d'un conteneur, pour la mise en oeuvre d'une première forme de réalisation d'un procédé, décrit dans la présente demande, de fabrication d'une pièce avec un insert en matériau composite par bobinage d'un faisceau ou d'une nappe de fils enduits, en début de bobinage ;
- la figure 7 représente une vue en coupe schématique partielle de la pièce de la figure 6, en fin de procédé de bobinage ;
- la figure 8 représente une vue en coupe schématique partielle de la pièce de la figure 7, sur laquelle sont rapportés un anneau extérieur et un couvercle ;
- la figure 9 représente une vue en coupe schématique partielle d'un conteneur avec une cavité annulaire, pour la mise en oeuvre d'une deuxième forme de réalisation d'un procédé, décrit dans la présente demande, de fabrication d'une pièce avec un insert en matériau composite par bobinage d'un faisceau ou d'une nappe de fils enduits; ;
- la figure 10 représente une vue en coupe schématique partielle d'un mandrin pour la mise en oeuvre de la deuxième forme de réalisation du procédé, décrit dans la présente demande, de fabrication d'une pièce avec un insert en matériau composite par bobinage d'un faisceau ou d'une nappe de fils enduits ;
- la figure 11 représente une étape de fixation d'un couvercle sur le conteneur de la figure 9 ;
- la figure 12 représente une vue schématique partielle en coupe d'une étape d'accrochage d'une nappe de fils enduits, dans un procédé non revendiqué de fabrication d'un insert décrit dans la présente demande, avec un clinquant de début de bobinage ;
- la figure 13 représente une vue schématique partielle en coupe d'une étape d'accrochage d'une nappe de fils enduits, dans un procédé non revendiqué de fabrication d'un insert décrit dans la présente demande, avec un clinquant de fin de bobinage ;
- la figure 14 représente une vue schématique partielle en coupe d'une étape de découpe du clinquant de début de bobinage de la figure 12 ;
- la figure 15 représente une vue schématique partielle en coupe de la fin des étapes d'accrochage de la nappe de fils enduits des figures 12 et 13 ;
- la figure 16 représente une vue schématique partielle en coupe d'un procédé de fabrication non revendiqué d'une pièce avec un insert en matériau composite bobiné, formé selon un procédé comportant des étapes d'accrochage de la nappe des figures 12 et 13.
- la figure 17 représente une vue en coupe schématique d'une première forme de réalisation d'un dispositif de soudage par électrodes d'une nappe de fils enduits à un support métallique, au début d'un procédé de bobinage de la nappe sur un mandrin ;
- la figure 18 représente une vue en coupe du dispositif de la figure 17, dans le plan 35 ;
- la figure 19 est un diagramme représentant schématiquement l'évolution de l'intensité du courant passant entre les électrodes, l'évolution de la pression exercée par les électrodes, ainsi que l'évolution de l'écrasement de la nappe, en fonction du temps, dans un procédé de soudage par électrodes d'une nappe de fils enduits à un support décrit dans la présente demande ;
- la figure 20 représente le dispositif de la figure 17, à la fin d'un procédé de bobinage de la nappe sur un mandrin ;
- la figure 21 représente une vue en coupe schématique d'une deuxième forme de réalisation d'un dispositif de soudage par électrodes d'une nappe de fils enduits à un support métallique, décrit dans la présente demande, au début d'un procédé de bobinage de la nappe sur un mandrin et
- la figure 22 représente le dispositif de la figure 21, en fin d'un procédé de bobinage de la nappe sur un mandrin.

On forme tout d'abord une pluralité de fils enduits, selon l'une des techniques connues, de préférence par un procédé d'enduction de fibres céramiques, au trempé, dans un bain de métal liquide. Ces fils sont enroulés chacun sur une bobine. Chaque fil a par exemple un diamètre de 0,2 à 0,3 mm.

On décrit ci-après une méthode de fabrication d'une nappe liée de fils enduits.

En référence à la figure 2, une pluralité de bobines 7, chacune avec un fil enduit 8 enroulé à sa circonférence, est disposée sur un module 9 de bobines 7. Ce module 9 permet de placer les bobines 7 de telle sorte qu'elles puissent être dévidées en direction d'un module d'ourdissage, présenté ci-après, sans que les fils 8 ne se croisent. En l'espèce, le module de bobines 9 comporte une structure en triangle isocèle supportant les bobines 7, pour moitié sur un côté du triangle et pour moitié sur l'autre côté, la pointe du triangle étant dirigée du côté vers lequel les fils 8 des bobines 7 sont dévidés, vers un lieu situé sur l'axe de symétrie du triangle que forme la structure du module de bobines 9.

Selon une autre forme de réalisation, chaque bobine 7 peut supporter un faisceau de fils enduits. Ainsi, pour former une nappe de cent fils enduits, on peut utiliser dix bobines 7 comportant chacune un faisceau de dix fils enduits enroulé à sa circonférence.

Les fils enduits 8 sont dévidés en direction d'un module 10 d'ourdissage. Ce module d'ourdissage 10 est ici représenté de façon schématique et non détaillée, car sa structure est accessible à l'homme du métier. Il est comparable à un module d'ourdissage utilisé dans le domaine du tissage. Le module d'ourdissage 10 comprend des moyens de guidage permettant de disposer les fils 8, tendus, parallèlement les uns aux autres, en une couche dans un même plan, sans chevauchement entre eux, en contact les uns avec les autres. L'objectif est de constituer une nappe plane de fils 8 parallèles en contact les uns avec les autres.

Les fils 8 ainsi ourdis sont entraînés dans un module 11 de soudage par laser. Ce module comporte un support 12 plan sur lequel se déplacent les fils 8, au-dessus duquel est monté un dispositif 13 de soudage par laser. Les fils 8 sont donc entraînés devant le dispositif de soudage par laser 13. L'ensemble est de préférence contenu dans une atmosphère neutre, par exemple dans une atmosphère d'argon projeté par une buse. Le dispositif 13 de soudage par laser peut par exemple comporter un laser de type YAG (Yttrium Aluminium Garnet) dopé au néodyme (Nd), qui présente l'avantage d'une grande précision quant à sa puissance et au point d'impact de son faisceau laser, ainsi que l'avantage d'une grande finesse du faisceau.

En aval du module de soudage par laser 11, les fils 8 sont entraînés par un module 17 d'entraînement des fils 8, depuis le module de bobine 9, en translation sur le support 12. Ce module d'entraînement 17 comporte en l'espèce une bobine 17' rotative autour de laquelle les fils 8 sont enroulés. La bobine 17' est entraînée en rotation, comme représenté par la flèche 18. Ainsi, les fils 8 sont entraînés depuis leur bobine 7 du module de bobines 9, le long du module d'ourdissage 10 et du module de soudage par laser 11, par le module d'entraînement 17, l'ensemble formant un dispositif 55 de formation d'une nappe liée de fils enduits 8. La nappe liée est enroulée sur la bobine 17' du module d'entraînement.

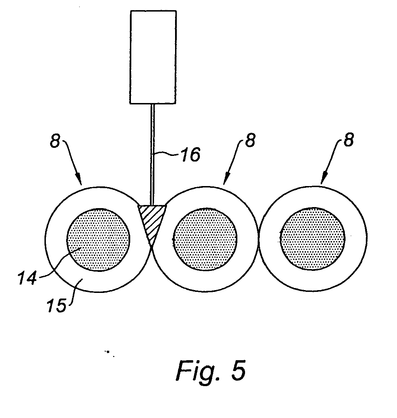

On voit sur la figure 5 une représentation en coupe, dans un plan transversal à la direction de déroulement des fils 8, au niveau du module de soudage par laser 11, du soudage de deux fils 8 entre eux. Le soudage effectué est un soudage par points par le dispositif de soudage par laser 13. Chaque fil 8 est solidarisé à ses voisins au niveau d'une pluralité de points de soudure. Chaque fil 8 comporte, comme on l'a vu précédemment, une fibre céramique 14, enrobée d'une gaine de métal 15, par exemple un alliage de Ti. Le faisceau laser est dirigé, comme représenté par la flèche 16, dans la direction d'un point de contact entre deux fils 8 successifs, perpendiculairement au plan contenant globalement les axes des fils 8 entraînés sur le support 12. Il s'ensuit une fusion locale de leur gaine de métal 15. On utilise le laser à faible puissance, par ailleurs très concentrée, de manière à s'assurer que la fibre céramique 14 ne soit pas affectée par cette fusion locale. Un volume minimum de la gaine métallique 15 est fondu. Il suffit à assurer la solidarisation des fils 8 à cet endroit. Les paramètres du soudage sont optimisés de telle sorte que le bain de soudage résultant de la fusion du métal ne soit pas débouchant.

Il est important que le faisceau laser soit dirigé sur une zone ponctuelle chevauchant deux fils 8, perpendiculairement au plan des fils 8, de manière qu'il n'endommage pas les fibres de céramique 14, dont l'intégrité est une condition nécessaire à la fonction qui leur est assignée, dans l'application à la formation d'une pièce avec un insert en matériau composite.

Il n'est pas nécessaire que les points de soudure soient très résistants. Leur fonction est uniquement d'assurer une solidarisation globale, ou maintien, des fils 8 entre eux, en vue de constituer une nappe liée. Cette solidarisation doit juste être assez forte pour permettre la manutention de la nappe, ses éventuels bobinage et débobinage, en vue par exemple de la constitution d'une pièce avec un insert en matériau composite. Il s'agit donc d'un soudage de maintien des fils 8 entre eux.

Les figures 3 et 4 représentent de façon schématique deux modes opératoires envisagés pour le module de soudage par laser 11, en l'espèce pour la formation d'une nappe de douze fils enduits 8.

Dans le mode opératoire de la figure 3, lorsque les fils enduits 8 sont situés sous le dispositif de soudage par laser 13, le module d'entraînement 17 est arrêté, afin de laisser les fils 8 immobiles. Le dispositif de soudage 13 effectue alors une série de points de soudure entre les fils 8 voisins, le long d'un segment perpendiculaire à leur axe de défilement sous le dispositif de soudage 13. A cet effet, le dispositif de soudage 13 effectue un premier point de soudure 19 entre deux fils 8, comme exposé ci-dessus en référence à la figure 5. Il est alors arrêté et déplacé, perpendiculairement à la direction de défilement des fils 8, jusqu'au droit du point de contact suivant entre deux fils 8, qu'il soude selon un deuxième point de soudure 19, et ainsi de suite, jusqu'à ce que tous les fils 8 soient solidarisés entre eux le long de ce segment de déplacement. Le dispositif de soudage 13 effectue donc un segment de points de soudure 19, perpendiculaire à l'axe de défilement des fils 8 sous le dispositif de soudage 13. Le module d'entraînement 17 est alors actionné de manière à faire défiler les fils 8 sur une longueur "L" devant le dispositif de soudage 13, puis l'opération est répétée sur un autre segment, parallèle au premier.

Dans le mode opératoire de la figure 4, les fils 8 sont entraînés de manière continue, dans la direction et le sens de défilement représentés par la flèche 20, mouvement imposé par le module d'entraînement 17. Le dispositif de soudage 13 effectue les mêmes opérations que précédemment, à savoir un soudage, puis le déplacement vers le point suivant selon une trajectoire perpendiculaire à la direction 20 du mouvement des fils 8, etc., depuis le premier fil 8 vers le dernier, puis inversement. Si la vitesse de déplacement des fils 8 est suffisamment faible, le soudage des points 19 entre deux fils en mouvement 8 est possible. On obtient donc une série de points de soudure 19 entre les fils 8, qui forme un zigzag sur la nappe formée par les fils 8.

Il est également possible d'obtenir une telle répartition des points de soudure 19 en zigzag en arrêtant le module d'entraînement 17 lors du soudage de chaque point de soudure 19, le module d'entraînement 17 entraînant les fils 8 sur une faible distance "1" entre chaque point de soudure 19, tandis que le dispositif de soudage 13 est déplacé.

Il est également possible de n'opérer qu'un ralentissement du mouvement des fils 8 au moment du soudage des points 19.

L'avantage d'une telle répartition des points de soudure 19 est sa plus grande homogénéité sur la surface de la nappe constituée par les fils 8.

Quoi qu'il en soit, en sortie du module de soudage par laser 11, les fils 8 se présentent sous la forme d'une nappe liée, au sein de laquelle ils sont solidarisés les uns aux autres au niveau des points de soudure 19 de maintien. La nappe est enroulée sur la bobine 17' du module d'entraînement 17.

Il n'est pas fait référence ici à la phase d'initialisation du procédé de fabrication d'une nappe liée de fils enduits 8. Cette phase peut être adaptée librement par l'homme du métier, par exemple en enroulant en début de procédé les fils 8 sur la bobine 17' sans qu'ils soient solidarisés les uns aux autres, la portion la plus intérieure de la nappe bobinée finale n'étant donc pas sous forme de nappe, ou par exemple en entraînant les fils en début de procédé grâce à un autre dispositif d'entraînement et en les reliant à la bobine 17' lorsqu'ils commencent à se présenter sous forme de nappe.

La distance "L" entre les segments de points de soudure 19, dans le cadre de la configuration en segments de la figure 3, ou encore la distance longitudinale "1" entre deux points de soudure 19 successifs, dans la configuration en zigzag de la figure 4, est dimensionnée en fonction de la rigidité souhaitée pour la nappe de fils enduits 8. Ainsi, pour une nappe rigide, les points de soudure 19 seront rapprochés les uns des autres, pour une nappe souple, les points de soudure 19 seront éloignés les uns des autres. D'autres configurations de répartition des points de soudure 19 sont bien sûr envisageables. La configuration et les espacements des points 19 seront choisis en fonction de l'application à laquelle est destinée la nappe liée, notamment si elle doit être bobinée, vrillée, ... tout en respectant un espacement minimum pour assurer la cohésion de l'ensemble dans les conditions définies de l'application. Les spécifications relatives à la configuration de la répartition des points de soudure 19 sont moins liées au procédé lui-même qu'à l'application à laquelle la nappe de fils enduits 8 est destinée.

Grâce à la vitesse d'exécution du soudage laser et à sa précision, il est possible d'assurer la fabrication d'une nappe liée de fils enduits 8, les fils 8 étant solidarisés les uns aux autres, dans un système automatisé, industriellement, pour la mise en oeuvre du procédé qui vient d'être décrit. On obtient ainsi rapidement de grandes quantités de nappes de fils enduits 8 - on peut former plusieurs kilomètres d'une même nappe - se présentant sous une forme exploitable de diverses manières. Par ailleurs, les nappes sont solidarisées par fusion de la gaine de métal 15 des fils 8, donc sans apport de matière, notamment sans apport de liant tel qu'une colle, ce qui permet de supprimer, dans un procédé plus global de formation d'une pièce avec un insert de matériau composite utilisant des fils enduits, toutes les étapes de déliantage.

On décrit maintenant un procédé de fabrication, conforme à l'invention, d'une pièce à symétrie de révolution avec un insert en matériau composite, comprenant une étape de bobinage d'un faisceau ou d'une nappe de fils enduits sur une pièce de révolution perpendiculairement à l'axe de cette dernière.

Comme on l'a vu plus haut, les pièces à symétrie de révolution avec un insert en matériau composite sont généralement formées suivant le procédé suivant :
- mise en place d'une bobine de fil enduit ;
- fabrication d'une préforme en forme de disque à partir de la bobine de fil enduit ;
- fabrication d'un conteneur, comprenant une cavité annulaire de réception de préformes ;
- empilage d'une pluralité de préformes dans la cavité annulaire;
- fermeture de la cavité avec un couvercle annulaire ;
- déliantage des préformes et mise sous vide ;
- compaction isostatique à chaud de l'ensemble ;
- usinage de l'ensemble pour l'obtention de la pièce finale.

Les différents inconvénients d'un tel procédé ont été relevés plus haut. On propose de résoudre ces problèmes, en particulier avec un procédé qui puisse être mis en oeuvre industriellement.

C'est ainsi que l'on propose ici un procédé comprenant une étape de bobinage d'un faisceau ou d'une nappe de fils enduits, soit sur une pièce intermédiaire qui est ensuite intégrée dans la cavité d'un conteneur, soit directement sur une partie interne du conteneur qui est ensuite complétée par une partie externe. Ainsi, au lieu d'empiler, sur toute la hauteur de la cavité, des préformes de la largeur de celle de la cavité, on bobine un faisceau ou une nappe de fils enduits, dont la largeur correspond à la hauteur de la cavité, le nombre de couches, ou tours, permettant de remplir la largeur de la cavité.

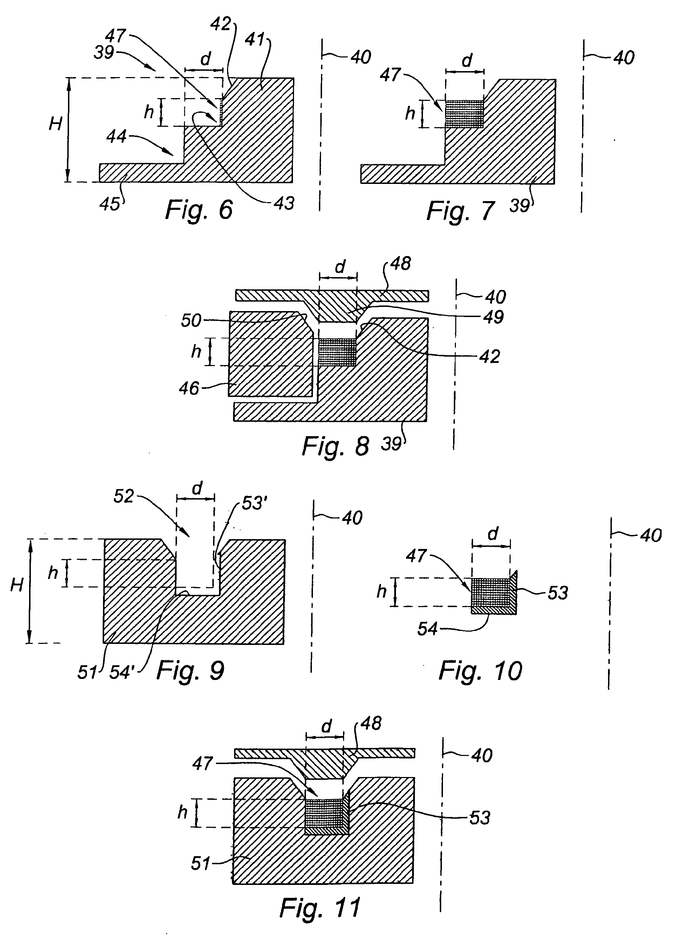

Une première forme de réalisation du procédé est présentée sur les figures 6 à 8. Dans cette forme de réalisation, on usine préalablement une pièce 39, formant partie interne d'un conteneur. Un conteneur s'entend d'une pièce de révolution autour d'un axe 40, comportant une cavité annulaire prévue pour recevoir des fils enduits. Un tel conteneur est de préférence dans le même métal que l'enrobage de fils enduits, ici en alliage de Ti. La pièce 39 formant partie interne d'un conteneur est une pièce de révolution autour d'un axe 40, monobloc. Sa portion interne 41 est de hauteur "H" égale à la hauteur du conteneur ; la hauteur s'entend de la dimension axiale. La pièce 39 comporte, périphériquement à cette portion interne 41, une portion chanfreinée 42 menant à un premier épaulement 43 de hauteur "h" et de largeur "d", qui correspond à la hauteur "h" et la largeur "d" de la cavité annulaire du conteneur ; la largeur s'entend de la dimension radiale. A partir de la périphérie de ce premier épaulement 43 s'étend un second épaulement 44, dont la dimension radiale complète la largeur du conteneur, sa surface s'étendant à une altitude inférieure à l'altitude de la surface de la cavité annulaire.

Autrement dit, la pièce 39 formant la partie interne du conteneur correspond au conteneur, auquel a été enlevé un anneau extérieur, de hauteur inférieure à la hauteur du conteneur, que l'on voit sous la référence 46 sur la figure 8, libérant ainsi l'espace radial situé à l'extérieur de la cavité annulaire formée dans le conteneur.

Il est ainsi possible d'amener un faisceau ou une nappe de fils 47 enduits sur la paroi formant la hauteur "h" du premier épaulement 43. Cet épaulement 43 correspondant à la cavité annulaire sans sa paroi externe.

Afin de bobiner un faisceau ou une nappe de fils 47 sur la pièce 39, il est préférable, lors du premier tour, de fixer ces fils sur la paroi de l'épaulement 43. Cette fixation est de préférence obtenue par un procédé de soudage par contact entre deux électrodes et passage d'un courant moyenne fréquence, tel que celui décrit plus loin.

S'il s'agit d'un faisceau de fils enduits 47, on peut par exemple disposer, pour dévider le faisceau, d'un module de bobines et d'un module d'ourdissage semblables à ceux de la figure 2 pour le procédé de fabrication d'une nappe, le faisceau ourdi étant alors directement bobiné sur la pièce 39.

S'il s'agit d'une nappe de fils enduits 47 préalablement formée, elle aura de préférence été formée selon le procédé de fabrication d'une nappe décrit plus haut. La nappe, enroulée sur une bobine, par exemple la bobine 17' du module d'entraînement 17 du dispositif de fabrication d'une nappe de la figure 2, est dévidée pour être bobinée sur la pièce 39 formant partie interne de conteneur.

Il est également possible de bobiner, sur la pièce 39, une nappe, en remplaçant directement la bobine 17' du module d'entraînement 17 de la figure 2 par la pièce 39 formant partie interne du conteneur. Les fils enduits sont ainsi ourdis, formés en une nappe puis bobinés sur la pièce 39. Cette fabrication en nappe est toutefois facultative.

Dans les trois cas, la pièce 39 formant partie interne de conteneur est ici mise en rotation autour de son axe 40 pour provoquer le bobinage du faisceau ou de la nappe de fils enduits 47. En référence à la figure 7, une fois le nombre de couches de fils requises bobinées, en l'espèce un nombre de couches permettant de combler la largeur "d" de l'épaulement 43 correspondant à la cavité annulaire, le faisceau ou la nappe de fils enduits 47 est de nouveau solidarisé, cette fois au bobinage, de préférence par le procédé de soudage par contact entre deux électrodes et passage d'un courant moyenne fréquence décrit plus loin, puis coupé. Dans ce cas, le faisceau ou la nappe de fils enduits 47 est soudé à la ou aux couches inférieures comme on le verra lors de la description de ce procédé de soudage.

En référence à la figure 8, on rapporte alors l'anneau extérieur 46 formant la partie externe du conteneur autour de la pièce 39 formant partie interne. Cet anneau 46 peut éventuellement être soudé, de préférence par soudage par faisceau d'électrons, ou juste maintenu en position. On reforme bien ainsi un conteneur, avec sa cavité annulaire dans laquelle sont bobinés les fils enduits, non pas ici sous forme de préformes de largeur "d" empilées sur une hauteur "h", mais sous forme de faisceaux ou nappes de fils enduits 47, de largeur "h", qui ont été bobiné en un nombre de couches d'épaisseur radiale totale égale à la largeur "d" de la cavité annulaire.

On rapporte alors un couvercle 48 annulaire, présentant une saillie annulaire 49 destinée à compléter le chanfrein 42 de la pièce 39 formant partie interne du conteneur et un chanfrein 50 de l'anneau extérieur 46, concentrique au chanfrein 42 de la pièce 39, en regard de ce dernier. Entre ces deux chanfreins 42, 50 s'étend la cavité annulaire avec les couches de faisceau ou de nappe de fils enduits 47, sur lesquels la saillie annulaire 49 du couvercle 48 vient en appui.

Une fois la pièce 39 formant partie interne, l'anneau extérieur et le couvercle mis en place, on se retrouve dans une configuration de l'art antérieur, avec un conteneur fermé comportant un insert de fils enduits. Cet ensemble est alors soudé, de préférence par soudage par faisceaux d'électrons, mis sous vide, puis compacté de façon isostatique à chaud, de manière bien connue, ce qui induit la fabrication d'un insert en matériau composite, avec une matrice métallique au sein de laquelle s'étendent des fibres céramiques. Il est alors possible d'usiner cet ensemble pour obtenir la pièce finale, avec son insert en matériau composite. Il est également possible d'usiner cet ensemble pour en extraire l'insert en matériau composite en tant que tel.

Un avantage du procédé qui vient d'être décrit est sa vitesse d'exécution, car les étapes de fabrication puis d'empilage des préformes sont supprimées, tandis que le bobinage des fils enduits sous forme de faisceau ou de nappe est beaucoup plus rapide. Par ailleurs, aucun matériau supplémentaire, comme par exemple de la colle, n'est nécessaire. Il s'ensuit, d'une part, un insert en matériau composite de meilleure qualité, d'autre part, la suppression des opérations de déliantage et de dégazage, et donc un gain de temps conséquent.

Une deuxième forme de réalisation du procédé est présentée sur les figures 9 à 11. Dans cette forme de réalisation, on forme préalablement un conteneur 51, annulaire autour d'un axe 40, de hauteur "H", comportant une cavité annulaire 52, correspondant à une cavité de hauteur "h" et de largeur "d" dont les parois de fond 54' et interne 53' ont été usinées afin d'obtenir une cavité annulaire 52 de plus grandes dimensions. On voit sur la figure 9, en traits pointillés, la cavité annulaire de hauteur "h" et de largeur "d", en traits pleins, la cavité telle qu'usinée, plus profonde et plus large.

En référence à la figure 10, on forme également un mandrin annulaire 53, avec un rebord radial 54, destiné à être logé dans la cavité annulaire 52 élargie du conteneur. Le mandrin 53 est dimensionné de telle façon que, lorsqu'il est logé dans la cavité 52, la cavité résultante est une cavité de hauteur "h" et de largeur "d", la paroi 53 du mandrin étant en appui sur la paroi interne 53' de la cavité annulaire 52 et son rebord radial 54 étant en appui sur sa paroi de fond 54'. Le mandrin 53 est ici constitué du même matériau que le conteneur 51, en l'espèce en alliage de Ti.

De même que précédemment, on bobine un faisceau ou une nappe de fils enduits 47, cette fois-ci sur le mandrin 53. Le faisceau ou la nappe présente une largeur totale égale à "h", et on bobine un nombre de couches dont l'épaisseur totale est égale à "d", largeur du rebord radial 54 du mandrin 53. De préférence, le début du faisceau ou de la nappe est solidarisé au mandrin par un procédé de soudage par contact entre deux électrodes tel que décrit plus loin.

Une fois le nombre requis de couches de faisceau ou de nappe de fils enduits 47 bobinées, la dernière couche est solidarisée à la ou aux couches précédentes, de préférence par le procédé de soudage par contact entre deux électrodes décrit plus loin, puis le faisceau ou la nappe est coupé. Le mandrin 53 avec son bobinage est alors inséré dans la cavité annulaire 52 du conteneur 51, comme on le voit sur la figure 11. On rapporte alors un couvercle 48, identique au couvercle 48 précédent, et l'ensemble est soudé par soudage par faisceau d'électrons, mis sous vide, puis compacté de façon isostatique à chaud et usiné pour obtenir la pièce finale avec son insert de matériau composite, de manière bien connue.

Dans les deux formes de réalisation qui ont été décrites, les fils enduits 47 sont bobinés les uns sur les autres, toujours dans le même plan. En vue en coupe, les axes des fils 47 forment donc un quadrillage dont la maille de base est une maille carrée. Afin d'obtenir une meilleure compacité de l'insert, il est préférable que chaque couche soit décalée de la précédente de la demi distance entre les axes de deux fils enduits successifs, les axes des fils de trois couches successives étant donc en quinconce les uns par rapport aux autres. A cet effet, il est possible de prévoir deux bobines dévideuses de nappes 47, ou deux modules dévideurs de faisceaux de fils enduits 47, placés de manière à ce que les nappes ou faisceaux 47 soient ainsi décalés en quinconce, enroulés simultanément l'un sur l'autre sur la pièce 39 formant la partie interne de conteneur ou sur le mandrin 53. Entre les bobines ou modules et la pièce 39, 53 sur laquelle ils sont enroulés, un dispositif peut être prévu, mettant en contact et plaçant les fils les uns par rapport aux autres.

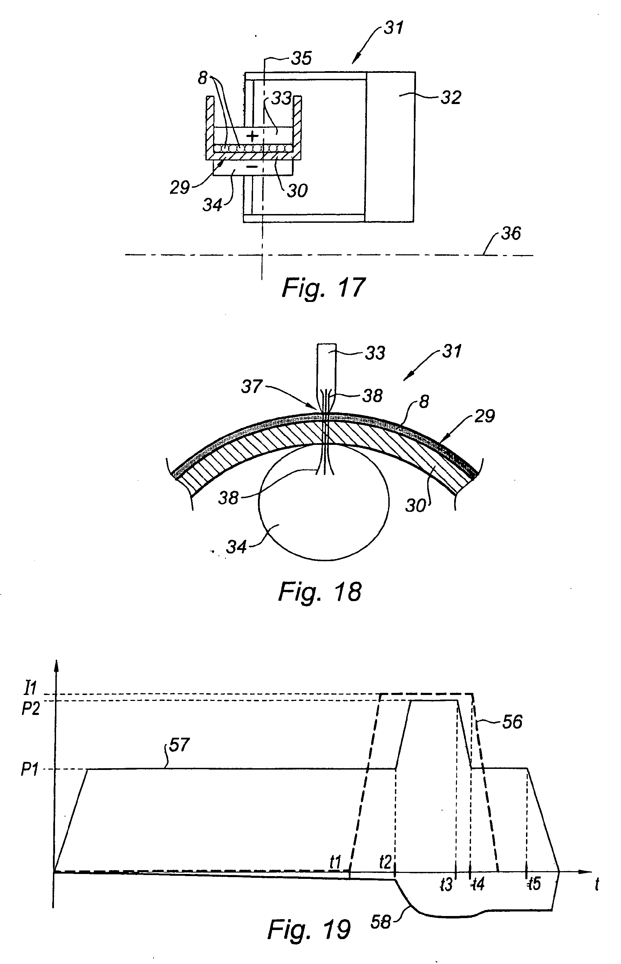

On décrit maintenant, en référence aux figures 17 à 22, le procédé qui permet de solidariser la nappe, soit au support métallique sur lequel elle est enroulée, soit à la nappe de la couche inférieure, par soudage par contact entre deux électrodes et passage d'un courant moyenne fréquence.

Les procédés, connus à ce jour, de solidarisation de fils enduits, proposent la projection d'une colle sur les fils, dont les inconvénients ont été relevés plus haut. Les procédés comprenant une étape de soudage des nappes sont par ailleurs généralement évités, car ils se heurtent à de nombreuses difficultés de mise en oeuvre, dont la plus importante est la nécessité d'éviter tout endommagement des fibres céramiques s'étendant au sein des fils enduits. Ces fibres peuvent présenter un diamètre de 100 à 200 µm, ou plus, et sont particulièrement fragiles en flexion et en cisaillement. Tout endommagement de la fibre céramique d'un fil enduit annihile les avantages inhérents à ce fil.

On décrit ci-après un procédé et un dispositif de soudage localisé d'un fil enduit ou d'une nappe liée ou d'un faisceau de fils enduits à un support métallique, le support s'entendant, soit d'un support métallique au sens propre, soit d'un autre fil enduit ou d'une autre nappe ou d'un autre faisceau de fils enduits. Ce procédé et ce dispositif permettent d'obtenir une solidarisation du fil ou de la nappe ou du faisceau au support, tout en préservant l'intégrité des fibres céramiques s'étendant au sein du ou des fils. Le procédé et le dispositif autorisent également la réparation des fils en cas de rupture lors d'un procédé de bobinage ou de drapage.

En référence aux figures 17 et 18, une nappe 29 de fils enduits 8, par exemple formée par le procédé de formation d'une nappe présenté plus haut, est destinée à être liée à un support 30, notamment un support de bobinage, par exemple la pièce 39 formant la partie interne du conteneur. Le support représenté est rectiligne mais lorsqu'il s'agit du mandrin 24 il est circulaire ou en portion de cercle.

A cet effet, on souhaite solidariser la nappe 29 au support 30, en début de bobinage. On utilise pour cela un dispositif 31 de soudage contact entre deux électrodes et passage d'un courant moyenne fréquence. Les fils enduits 8 sont ici vus en coupe et s'étendent le long de la périphérie externe du support 30. La nappe 29 comporte ici dix fils.

Le dispositif 31 de soudage par électrodes comporte un générateur moyennes fréquences 32, relié à une électrode positive 33 et une électrode négative 34. Dans la forme de réalisation de la figure 17, l'électrode positive 33 et l'électrode négative 34 s'étendent transversalement à la nappe 29. Leur forme en coupe est uniforme sur toute cette largeur.

L'électrode positive 33, qui peut par exemple être en cuivre ou en tungstène, comporte une portion d'extrémité 37 biseautée. Cette portion d'extrémité 37 est conformée de façon à ce que les lignes de courant, convergent au maximum de manière à passer le long d'une ligne, ou bande, de contact, entre l'électrode positive 33 et la nappe 29 de fils enduits 8, la plus étroite possible. Cette portion d'extrémité 37 est arrondie, de façon à ne pas cisailler les fils 8, ce qui risquerait de les endommager. Le rayon de cette portion d'extrémité 37 est choisi de manière à obtenir la meilleure convergence possible des lignes de courant, sans toutefois être trop faible, afin de ne pas cisailler les fils 8.

L'électrode négative 34 est également conformée de manière à minimiser sa surface de contact avec le support 30 auquel la nappe 29 doit être soudée, afin de faire converger les lignes de courants 38 le long d'une ligne, ou bande, la plus étroite possible. En effet, la géométrie du mandrin, généralement tubulaire, permet d'utiliser une électrode négative cylindrique réduisant ainsi la surface de contact à une génératrice favorable à la convergence des lignes de courant.

Un tel agencement des électrodes 33, 34 assure le soudage subséquent, de la nappe 29 au support 30, le long d'une bande très étroite. La concentration de courant est constante dans cette bande.

Le procédé de soudage par électrodes comporte la particularité de combiner le chauffage du métal de la nappe 29 avec un léger forgeage, obtenu par mise sous pression de la nappe 29 par les électrodes 33, 34. La puissance et le temps du chauffage et de la mise sous pression sont avantageusement pilotés, pour obtenir un échauffement minimal du métal, son forgeage, et réaliser ainsi un soudage, à l'état solide.

Le chauffage de la nappe 29 est obtenu par passage du courant dans la nappe 29 et le support 30, entre l'électrode positive 33 et l'électrode négative 34, du fait de l'intensité pilotée générée par le générateur moyennes fréquences 32. La pression sur la nappe 29 est ici obtenue par mise sous pression par l'électrode positive 33 qui remplit ainsi une seconde fonction, de presse. La forme arrondie de sa portion d'extrémité 37 revêt toute son importance pour cette fonction, puisqu'il ne faut pas cisailler les fils 8 de la nappe 29.

On voit sur la figure 19 un diagramme représentant l'évolution de l'intensité du courant passant entre les électrodes 33, 34 sur la courbe 56, en pointillés, et l'évolution de la pression exercée par l'électrode positive 33, sur la courbe 57, en traits pleins au-dessus de l'axe des abscisses, en fonction du temps "t". On voit également une courbe 58, en traits pleins en dessous de l'axe des abscisses, représentant l'écrasement de la nappe 29.

Le déroulement du procédé de soudage par électrodes ici décrit est le suivant. Comme nous venons de le préciser, il s'agit d'un procédé de soudage à l'état solide. L'électrode positive 33 et l'électrode négative 34 sont mises en contact, respectivement, avec la nappe 29 de fils enduits 8 et la surface intérieure du mandrin 30. Dans une première phase, seule une pression est appliquée sur les fils enduits 8, entre les deux électrodes 33, 34. La pression est amenée à une valeur P1, qui est conservée jusqu'à un instant t1. P1 sera de préférence comprise entre 50 et 100 W. La fonction de cette phase de mise sous pression "à froid" est d'assurer la bonne mise en contact des fils enduits 8, à la fois entre eux et sur les parois de leur support 30. Dans le cas étudié plus loin où l'on soude au moins deux couches de fils enduits 8 ensemble, il s'agit, pendant cette phase, de manière similaire, d'assurer la mise en contact de tous les fils concernés entre eux (une couche de fils remplissant le rôle de support pour l'autre). Cette bonne mise en contact garantit le bon passage du courant lors de la phase suivante.

Dans une deuxième phase, à l'instant t1, alors que la pression reste constante et égale à P1, l'intensité est portée à une valeur I1. I1 sera de préférence comprise entre 500 et 1500 A. Cela entraîne l'échauffement du métal enrobant les fibres de céramique des fils enduits 8 et le début du soudage.

Dans une troisième phase, à un instant t2, la pression est portée à une valeur P2 supérieure à P1, afin de mettre en oeuvre un forgeage supplémentaire des fils enduits 8 de la nappe 29. On peut noter sur la courbe 58 que l'écrasement de la nappe 29, qui était faible et régulier jusqu'à l'instant t2, s'amplifie du fait du forgeage supplémentaire, c'est-à-dire de l'action conjuguée du passage du courant (donc du chauffage) et de la pression plus importante. Le soudage se produit alors.

Dans une quatrième phase, à partir d'un instant t3, la pression est redescendue à sa valeur P1.

Dans une cinquième phase, dès l'instant t4 où la pression a repris sa valeur P1, l'intensité est remise à zéro, tandis que la pression est conservée à sa valeur P1, afin de maintenir le soudage qui se refroidit, jusqu'à un instant t5, début de la dernière phase de remise à zéro de la pression exercée par les électrodes 33, 34 et de fin du procédé.

On peut noter, sur la courbe 58, que lors des quatrième, cinquième et dernière phases, l'écrasement de la nappe 29 peut être amené à légèrement diminuer (c'est-à-dire que l'épaisseur de la nappe augmente à nouveau légèrement) par un effet d'élasticité. L'écrasement se fait généralement sur 0,05 à 0,15 mm.

Ainsi, du fait de ce procédé de soudage par contact entre deux électrodes, les gaines métalliques des fils enduits 8 sont échauffées localement, soudées et forment des liaisons entre elles et avec leur support, dans le cas qui vient d'être présenté avec la surface externe du support 30, le long d'une bande fine suivant la zone de contact entre la portion d'extrémité 37 de l'électrode positive 33 et la nappe 29. Ce soudage se fait sans affecter les fibres de céramique. Plus précisément, le passage du courant à moyenne fréquence conduit à une température locale telle que le matériau constituant la gaine des fils enduits 8 reste à l'état solide mais atteint le domaine de soudage (et de forgeage) du matériau, la température de fusion du matériau n'étant pas atteinte. La force appliquée par l'électrode, typiquement de l'ordre de 10 DaN, permet d'activer le soudage. On obtient ainsi, le long de cette bande, une épaisseur de métal monolithique au sein de laquelle s'étendent les fibres céramiques, qui n'ont pas été affectées par l'opération de soudage.

On obtient ainsi une solidarisation de la nappe 29 au support 30, qui permet d'initier le procédé de bobinage. Cette solidarisation n'est pas nécessairement très résistante, il s'agit d'une bande de soudure de maintien, suffisante pour l'application à laquelle elle est destinée, ici le bobinage d'une nappe 29 de fils enduits 8 sur un mandrin.

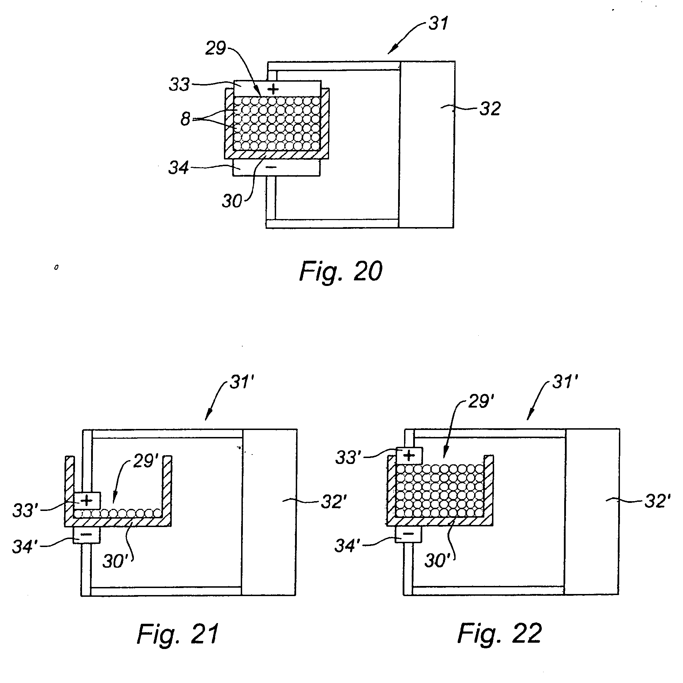

En référence à la figure 20, la même opération est réalisée en fin de bobinage, afin de souder la fin de la nappe 29 à la couche inférieure de la nappe 29, située juste sous elle. Le procédé de soudage par contact mis en oeuvre est similaire. L'intensité générée par le générateur moyennes fréquences 32 et la pression exercée par l'électrode positive 33 sont optimisées de manière à ce que, de préférence, seules les deux couches extérieures de la nappe 29 soient soudées l'une à l'autre, formant en quelques sortes, le long de la bande soudée, une couche monolithique au sein de laquelle s'étendent les deux séries de fibres céramiques, sur une faible largeur. Il n'est pas exclu de souder plusieurs couches de la nappe 29 ensemble. Cela ne présente pas forcément d'inconvénients. En effet, si le bobinage est destiné à former un insert dans une pièce, l'ensemble sera de toute manière compacté par la suite. Quoi qu'il en soit, les énergies sont maîtrisées pour contrôler la profondeur de nappe soudée. Le courant passe de l'électrode positive 33 vers l'électrode négative 34, à travers toutes les couches de la nappe 29 et le mandrin 30. La phase de mise sous pression "à froid" permet d'assurer le contact des couches pour un bon passage du courant.

Les figures 21 et 22 représentent, comme les figures 17 et 20, respectivement, une nappe 29', bobinée sur un mandrin 30', qui est soudée au mandrin 30' en début de bobinage (figure 21), puis dont au moins les deux dernières couches sont soudées en fin de bobinage (figure 22). Ces opérations de soudage sont ici mises en oeuvre à l'aide d'un dispositif 31' de soudage par électrodes, comportant un générateur moyennes fréquences 32', semblable au générateur 32 du dispositif 31 des figures 17 et 20, et deux électrodes, positive 33' et négative 34'. Ces électrodes 33', 34' présentent la même forme en coupe, de la figure 18, que les électrodes 33, 34 des figures 17 et 20, mais ne s'étendent pas sur une dimension égale à la hauteur du cylindre formé par le mandrin 30', mais sur une dimension inférieure. Par conséquent, lorsque l'électrode positive 33' est appliquée sur la nappe 29', l'électrode négative 34' étant placé au droit de l'électrode positive 33' contre la surface intérieure du mandrin 30', elle ne couvre pas, le long de la ligne de contact, toute la largeur de la nappe 29', mais juste une partie de cette dernière. Le procédé de soudage par contact est mis en oeuvre de la même manière que précédemment, à la différence que les électrodes sont déplacées le long de la largeur de la nappe 29' pour souder une bande sur toute la largeur de la nappe 29' ; de préférence, la nappe 29' est soudée sur une bande de la dimension des électrodes 33', 34', celles-ci étant immobiles, puis les électrodes 33', 34' sont déplacées (translatées) pour souder une bande adjacente. Il est également possible, si cela est souhaité, de ne souder la nappe 29' au mandrin 30', ou deux couches de la nappe 29' entre elles, que sur une bande de la dimension des électrodes 33', 34'.

Dans le cas où le soudage est effectué de manière circulaire autour de la circonférence de la nappe, par exemple aux extrémités du mandrin 30, il faut adapter le dispositif de soudage, car il faut souder la nappe à son support suivant une courbe circulaire concentrique avec la courbe d'extrémité du mandrin. Il est possible, à cet effet, de prévoir une électrode positive avec une portion d'extrémité concave, s'adaptant à cette courbure, et/ou de faire tourner le mandrin sur son axe au cours du procédé de soudage.

Il est également possible de prévoir de former une bande de soudure longitudinale, en appliquant le dispositif de l'une des figures 8, 11, 12 ou 13 à une nappe drapée sur le mandrin, le long d'une bande longitudinale parallèle à l'axe du mandrin.

On a décrit le procédé de soudage par contact en relation avec une nappe de fils enduits préalablement formée, mais le procédé s'applique également au soudage sur un support d'un faisceau de fils, s'étendant les uns à côté des autres sans avoir été préalablement solidarisés les uns aux autres, ou au soudage d'un seul fil enduit.

Le procédé de soudage par contact d'un ou plusieurs fils enduits permet également d'envisager la réparation d'un fil ou d'une nappe ou d'un faisceau de fils en cas de rupture lors de son bobinage. Dans l'art antérieur, lorsqu'un fil était bobiné, sa rupture entraînait l'annulation du procédé et son redémarrage pour un nouveau bobinage, le fil qui avait été bobiné et cassé étant perdu. Le procédé de soudage par contact permet de souder les extrémités cassées du fil et de reprendre le bobinage. Cela s'applique également au bobinage d'une nappe de fils ou d'un faisceau de fils, ou à tout autre procédé nécessitant le soudage d'un fil enduit, d'une nappe ou d'un faisceau de fils enduits, à un support.

En définitive, le procédé de soudage ici décrit permet un soudage localisé d'un fil enduit ou d'une nappe ou d'un faisceau de fils enduits à un support métallique, le support pouvant s'entendre d'un support à proprement parler (une paroi métallique), mais aussi d'un fil ou d'une autre couche de la nappe (ou faisceau) ou d'une autre nappe (ou faisceau). Ce procédé de soudage permet d'envisager des étapes de réparation en cours de bobinage qui n'étaient pas possibles auparavant, ainsi que de mettre en oeuvre les procédés de bobinage d'une nappe pour former un insert, ou de drapage d'une nappe autour d'un mandrin pour former une pièce tubulaire avec un insert. Il permet d'éviter tout apport de matériau supplémentaire, que ce soit un matériau de brasage ou une colle comme cela était fait dans l'art antérieur. La légère déformation subie par le fil enduit ou les fils enduits de la nappe est sans importance, puisqu'ils sont de toute façon destinés à être compactés par la suite, pour la formation d'un insert à matrice métallique comportant des fibres e céramique. Les fibres de céramique ne sont pas endommagées par le procédé.

Selon une autre forme de réalisation non revendiquée, on forme par bobinage un insert de fils enduits, comportant des clinquants métalliques d'accrochage de début de bobinage et de fin de bobinage, obtenu par le procédé décrit ci-après, on dispose l'insert bobiné avec ses clinquants d'accrochage dans la cavité d'un conteneur, on rapporte un couvercle annulaire et l'ensemble est compacté de façon isostatique à chaud de sorte à obtenir une pièce avec un insert en matériau composite.

Ainsi, le bobinage direct à partir d'un ou plusieurs faisceaux ou nappes de fils enduits permet de maîtriser l'arrangement et donc la densité des fibres de céramique au sein de l'insert en matériau composite de la pièce.

Une variante de procédé de fabrication d'un insert en matériau composite va maintenant être décrite, et non revendiquée, d'ici jusqu'à la fin de la description.

Dans le procédé décrit plus haut de fabrication d'un insert de matériau composite, comprenant une étape de bobinage d'une nappe de fils enduits, la nappe est solidarisée, en début de bobinage, au conteneur ou à un mandrin, en fin de bobinage, à la couche précédente, par exemple par soudage par contact.

On peut souhaiter disposer d'un insert ne comportant pas de telles soudures, et n'étant pas forcément directement solidaire d'un conteneur ou d'un mandrin, que l'on puisse manipuler et subséquemment introduire dans la cavité annulaire d'un conteneur.

C'est ainsi que l'on propose un procédé non revendiqué de fabrication d'un insert, comportant une étape d'accrochage mécanique d'une nappe de fils enduits avec un clinquant, en début et en fin de bobinage.

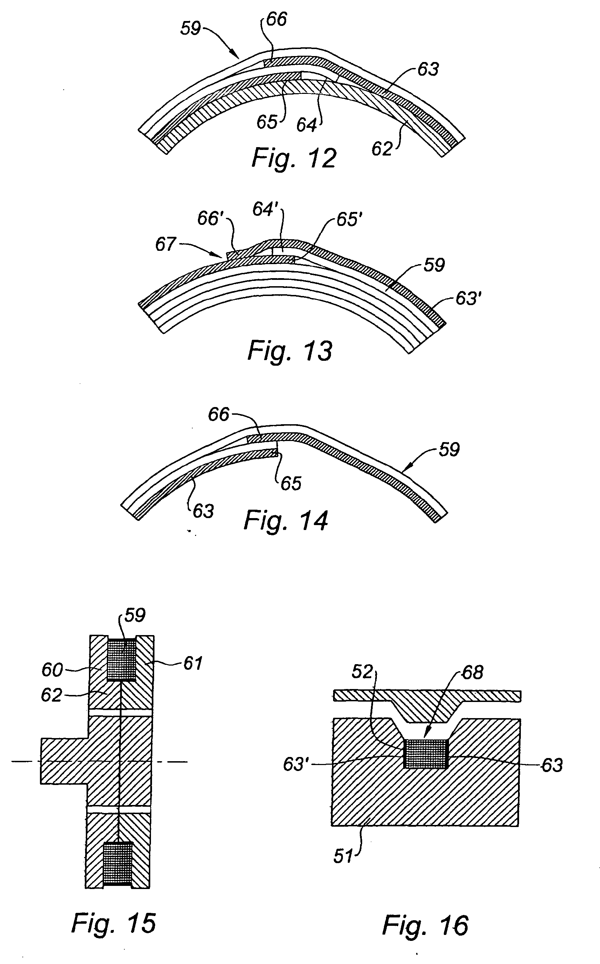

En référence à la figure 15, qui représente la fin du bobinage d'une nappe avec des étapes d'accrochage avec un clinquant en début et en fin de bobinage, une nappe 59 d'une pluralité de fils enduits est bobinée entre deux flasques 60, 61, entre lesquels s'étend un mandrin 62 dont les flasques 60, 61 sont solidaires. Les flasques 60, 61 et le mandrin 62 forment ainsi une pièce de révolution. De préférence, la nappe de fils enduits 59 est obtenue par le procédé de fabrication d'une nappe de fils enduits décrit plus haut.

En référence à la figure 12, lors du bobinage de la première couche de la nappe 59, on bobine avec la nappe un clinquant 63, c'est-à-dire une feuille de métal. Le clinquant est de préférence dans la même matière que l'enrobage des fils enduits, ou un matériau similaire, ici en alliage de Titane. Le clinquant est de préférence de la même largeur que celle de la nappe de fils enduits 59. Sa longueur est légèrement supérieure à la circonférence du mandrin 62 autour duquel il est enroulé.

Le clinquant 63 est placé sous la nappe 59 qui est bobinée, la première portion d'extrémité 64 de la nappe 59 dépassant en amont au-delà de la première portion d'extrémité 65 du clinquant 63. Le clinquant 63 et la nappe 59 sont enroulés sur un tour autour du mandrin 62, le clinquant 63 étant donc en contact avec le mandrin 62. A la fin du tour, le clinquant 63 passe au-dessus de la première portion d'extrémité 64 de la nappe 59 et la recouvre partiellement, sa seconde portion d'extrémité 66 se situant au-delà du niveau de la première portion d'extrémité 65 du clinquant 63 et la recouvrant donc, le clinquant 63 coinçant la première couche de la nappe 59, notamment sa portion d'extrémité 64, entre ses deux portions d'extrémité 65, 66. Le clinquant 63 assure ainsi une fonction d'accrochage de la nappe 59, ici de sa première couche bobinée, donc de la partie interne de l'insert qui sera formé, puisque sa seconde portion d'extrémité 66 est ensuite bloquée par le bobinage des autres couches de la nappe 59.

Le bobinage de la nappe 59 est poursuivi de façon à bobiner le nombre de couches requis et, en fin de bobinage, en référence à la figure 13, un nouveau clinquant 63' est rapporté et enroulé, sur le dernier tour, au-dessus de la dernière couche de la nappe 59, afin d'assurer une fonction d'accrochage de la nappe 59, ici de sa dernière couche bobinée, donc de la partie externe de l'insert bobiné. Le clinquant 63' de fin de bobinage est tout à fait semblable au clinquant 63 de début de bobinage, exception faite de sa longueur, plus grande, qui est adaptée à la circonférence de la dernière couche de la nappe 59. La première portion d'extrémité 65' du clinquant 63' est placée en dessous de la deuxième portion d'extrémité 64' de la nappe 59, qui correspond à la portion d'extrémité 64' de sa dernière couche. Le clinquant 63' est enroulé, seul, autour de cette dernière couche de la nappe 59 et sa deuxième portion d'extrémité 66' passe au-dessus de la deuxième portion d'extrémité 64' de la nappe 59, qui est ainsi coincée entre les première et deuxième portions d'extrémité 65', 66' du clinquant 63' de fin de bobinage.

De préférence, la longueur du clinquant 63' de fin de bobinage est agencée de telle sorte que sa deuxième portion d'extrémité 66' passe par-dessus la deuxième portion d'extrémité 64' de la nappe 59 et puisse venir en contact avec la surface externe du clinquant 63' de fin de bobinage, à proximité de sa première portion d'extrémité 65'. De préférence dans ce cas, on soude cette deuxième portion d'extrémité 66' à la surface externe du clinquant 63', le long de leur bande de contact 67, par tout procédé de soudage approprié. Tout autre moyen de fixation peut être mis en oeuvre.

On obtient ainsi une bobine d'une nappe 59 de fils enduits, bobinée selon une pluralité de couches, avec un système d'accrochage du côté interne - clinquant de début de bobinage 63 - et du côté externe - le clinquant de fin de bobinage 63'. Ces clinquants 63, 63' assurent le maintien de la bobine, qui peut donc être enlevée de la pièce comportant le mandrin 62 et les flasques 60, 61, et manipulée telle quelle. A cet effet, un des flasques peut être amovible. Cette bobine forme un insert 68 bobiné de matériau composite. La rigidité de l'insert 68 dépend de l'épaisseur choisie pour les clinquants 63, 63'. Typiquement, cette épaisseur peut être comprise entre 0,2 et 0,5 mm pour un clinquant en alliage de Titane. Le clinquant interne, ou clinquant de début de bobinage 63, forme une base de support de l'insert bobiné 68. Le clinquant externe, ou clinquant de fin de bobinage 63', forme l'enveloppe externe de l'insert bobiné 68.

Une fois l'insert 68 enlevé de son support, la première portion d'extrémité 64 de la nappe 59 dépasse, du côté interne, de la première portion d'extrémité 65 du clinquant 63. De préférence, en référence à la figure 14 sur laquelle seules les deux premières couches de l'insert bobiné 68 sont représentées, cette portion d'extrémité 64 est découpée, ou arasée, au droit de l'extrémité du clinquant 63.

De préférence, la deuxième portion d'extrémité 66 du clinquant interne 63 et la première portion d'extrémité 65' du clinquant externe 63' sont d'épaisseur réduite par rapport au reste du clinquant considéré 63, 63', du moins sur leur portion destinée à être située au droit à la fois d'une portion d'extrémité 64, 64' de la nappe 59 et de l'autre portion d'extrémité 65, 66' du clinquant considéré 63, 63'. Cela permet de réduire les excroissances radiales liées au chevauchement de clinquant. De préférence également, ces zones de chevauchement des clinquants interne 63 et externe 63' sont décalées angulairement afin de minimiser les excroissances radiales.

Le reste de l'épaisseur des clinquants 63, 63' est le fruit d'un compromis. En effet, l'épaisseur de chaque clinquant 63, 63' doit être la plus faible possible pour limiter l'augmentation de dimension radiale due à sa présence, mais suffisamment grande pour assurer la rigidité de l'insert bobiné 68 pour ses manipulations ultérieures, en fonction de l'application à laquelle il est destiné.

En référence à la figure 16, l'insert bobiné 68, une fois formé avec ses clinquants 63, 63' d'accrochage, ou de maintien, est disposé dans la cavité annulaire 52 d'un conteneur 51, semblable au conteneur préalablement évoqué ou aux conteneurs de l'art antérieur. On rapporte un couvercle annulaire 48 et l'ensemble est compacté de manière isostatique à chaud, afin d'obtenir une pièce avec un insert en matériau composite, de façon classique.

## Revendications

1. Procédé de fabrication d'une pièce avec un insert en matériau composite à matrice métallique, au sein de laquelle s'étendent des fibres céramiques, l'insert en matériau composite étant obtenu à partir d'une pluralité de fils enduits, comportant chacun une fibre céramique enrobée d'une gaine métallique, le procédé comprenant la fabrication d'un insert avec une étape de bobinage d'un faisceau ou d'une nappe liée de fils enduits (47) autour d'une pièce de révolution (39 ; 62) perpendiculairement à l'axe de ladite pièce, **caractérisé par le fait que**, en début de l'étape de bobinage, le faisceau ou la nappe de fils enduits est solidarisé à la pièce de révolution par un procédé de soudage par contact entre deux électrodes (33, 34) et passage d'un courant moyenne fréquence.

2. Procédé de fabrication d'une pièce avec un insert en matériau composite à matrice métallique selon la revendication 1, dans lequel le faisceau ou la nappe de fils enduits (47) est bobiné autour d'un mandrin (53), le mandrin étant ensuite inséré dans une cavité annulaire (52) d'un conteneur (51), sur lequel est rapporté un couvercle, l'ensemble étant soumis à une compaction isostatique à chaud.

3. Procédé de fabrication d'une pièce avec un insert en matériau composite à matrice métallique selon la revendication 1, dans lequel le faisceau ou la nappe liée de fils enduits (47) est bobiné autour d'une pièce de révolution (39) formant partie interne d'un conteneur (51), sur laquelle est ensuite rapportée une partie externe et un couvercle (48), l'ensemble étant soumis à une compaction isostatique à chaud.

4. Procédé de fabrication d'une pièce avec un insert en matériau composite à matrice métallique selon l'une des revendications 1 à 3, dans lequel, en fin de l'étape de bobinage, le faisceau ou la nappe de fils enduits est solidarisé au bobinage par un procédé de soudage par contact entre deux électrodes et passage d'un courant moyenne fréquence.

5. Procédé de fabrication d'une pièce avec un insert en matériau composite à matrice métallique selon l'une des revendications 1 à 4, dans lequel on bobine une nappe liée de fils enduits, la nappe étant formée par un procédé de fabrication d'une nappe (29) dans lequel les fils enduits (8) sont soudés par laser (13), pour former des points de soudure entre les fils voisins.

6. Procédé de fabrication d'une pièce avec un insert en matériau composite à matrice métallique selon l'une des revendications 1 à 5, dans lequel les fils enduits sont bobinés en quinconce au sein de l'insert.

## Claims

1. Process for manufacturing a component with an insert made of a composite comprising a metal matrix, within which ceramic fibers extend, the insert made of a composite being obtained from a plurality of coated filaments, each comprising a ceramic fiber coated with a metal sheath, the process comprising the manufacture of an insert with a step of winding a bundle or bonded sheet of coated filaments (47) around a body of revolution (39; 62) perpendicular to the axis of rotation of said body, **characterized in that** at the start of the winding step, the bundle or sheet of coated filaments is fastened to the body of revolution by a contact welding process between two electrodes (33, 34) and passage of a medium-frequency current.

2. Process for manufacturing a component with an insert made of a metal-matrix composite according to claim 1, in which the bundle or sheet of coated filaments (47) is wound around a mandrel (53), the mandrel then being inserted into an annular cavity (52) of a container (51), on which a lid is added, and the assembly being compacted by hot isostatic pressing.

3. Process for manufacturing a component with an insert made of a metal-matrix composite according to claim 1, in which the bundle or bonded sheet of coated filaments (47) is wound around a body of revolution (39) forming an internal part of a container (51), to which an external part and a lid (48) are added, and the assembly being compacted by hot isostatic pressing.

4. Process for manufacturing a component with an insert made of a metal-matrix composite according to either of claims 1 to 3, in which, at the end of the winding step, the bundle or sheet of coated filaments is fastened to the wound coil by a contact welding process between two electrodes and passage of a medium-frequency current.

5. Process for manufacturing a component with an insert made of a metal-matrix composite according to one of claims 1 to 4, in which a bonded sheet of coated filaments is wound, the sheet being formed by a process for manufacturing a sheet (29) in which the coated filaments (8) are laser-welded (13) in order to form spot welds between the adjacent filaments.

6. Process for manufacturing a component with an insert made of a metal-matrix composite according to one of claims 1 to 5, in which the coated filaments are wound in a staggered fashion within the insert.

## Patentansprüche

1. Verfahren zur Herstellung eines Bauteils mit einem Einsatz aus Metallmatrix-Verbundmaterial, in dem sich Keramikfasern erstrecken, wobei der Einsatz aus Verbundmaterial aus einer Vielzahl von beschichteten Fäden erhalten wird, umfassend jeweils eine Keramikfaser, die mit einem Metallmantel umwickelt ist, wobei das Verfahren die Herstellung eines Einsatzes mit einem Schritt der Wicklung eines Bündels oder eines Metallbandes aus beschichteten Fäden (47) um ein drehendes Bauteil (39; 62) senkrecht zur Achse des Bauteils umfasst, **dadurch gekennzeichnet, dass** zu Beginn des Schritts der Wicklung das Bündel oder das Band aus beschichteten Fäden fest mit dem drehenden Bauteil durch ein Verfahren des Kontaktschweißens zwischen zwei Elektroden (33, 34) und des Durchflusses eines Stroms mittlerer Frequenz verbunden wird.

2. Verfahren zur Herstellung eines Bauteils mit einem Einsatz aus Metallmatrix-Verbundmaterial nach Anspruch 1, wobei das Bündel oder das Band aus beschichteten Fäden (47) um einen Dorn (53) gewickelt wird, wobei der Dorn anschließend in einen ringförmigen Hohlraum (52) eines Behälters (51) eingeführt wird, auf den ein Deckel gesetzt wird, wobei die Gesamtheit einer isostatischen Heißkompaktion unterzogen wird.

3. Verfahren zur Herstellung eines Bauteils mit einem Einsatz aus Metallmatrix-Verbundmaterial nach Anspruch 1, wobei das Bündel oder das Metallband aus beschichteten Fäden (47) um ein drehendes Bauteil (39) gewickelt wird, das einen inneren Teil eines Behälters (51) bildet, auf dem anschließend ein äußerer Teil und ein Deckel (48) gesetzt wird, wobei die Gesamtheit einer isostatischen Heißkompatktion unterzogen wird.

4. Verfahren zur Herstellung eines Bauteils mit einem Einsatz aus Metallmatrix-Verbundmaterial nach einem der Ansprüche 1 bis 3, wobei am Ende des Schritts der Wicklung das Bündel oder das Band aus beschichteten Fäden mit der Wicklung durch ein Verfahren des Kontaktschweißens zwischen zwei Elektroden und des Durchflusses eines Stroms mittlerer Frequenz fest verbunden wird.

5. Verfahren zur Herstellung eines Bauteils mit einem Einsatz aus Metallmatrix-Verbundmaterial nach einem der Ansprüche 1 bis 4, wobei ein Metallband aus beschichteten Fäden gewickelt wird, wobei das Band durch ein Verfahren zur Herstellung eines Bandes (29) gebildet wird, bei dem die beschichteten Fäden (8) durch Laser (13) geschweißt werden, um Schweißpunkte zwischen den benachbarten Fäden zu bilden.

6. Verfahren zur Herstellung eines Bauteils mit einem Einsatz aus Metallmatrix-Verbundmaterial nach einem der Ansprüche 1 bis 5, wobei die beschichteten Fäden im Einsatz versetzt angeordnet gewickelt werden.
